# EUROPEAN PATENT APPLICATION

(11) **EP 4 806 708 A1**
(43) Date of publication of application: **16.09.2026**
(21) Application number: 26162792.1
(22) Date of filing: 06.03.2026
(51) Int. Cl.: B60L 3/00, B60L 3/04

(54) **WORKING MACHINE**

(30) Priority: 10.03.2025 JP 2025037705
(71) Applicant: Yanmar Holdings Co., Ltd., Osaka (JP)
(72) Inventor: TAMURA, Kazuki, Fukuoka (JP); NOMURA, Kotaro, Fukuoka (JP)
(74) Representative: Isarpatent

(57) **Abstract**

[Problem] To reduce a risk of damage to the battery unit due to collision with an obstacle or the like, while safety during inspection or the like is ensured.

[Solution] A working machine 100 includes a battery unit 1, a relay unit 2, and a safety device 12. The battery unit 1 transmits and receives electric power with an electrical device 600.

The relay unit 2 relays the above-described transmission and reception of electric power. The safety device 12 detects whether or not an electric circuit 10 between the battery unit 1 and the relay unit 2 has been disconnected. In a case where the electric circuit 10 is disconnected, the above-described transmission and reception of electric power is brought into a stopped state. At least a part of the safety device 12 is disposed above the battery unit 1.

## Description

### TECHNICAL FIELD

The present invention relates to a working machine.

### BACKGROUND ART

Conventionally, a working machine including a safety device that stops energization of a cable in accordance with removal of the cable has been known. For example, in an electric hydraulic excavator of Patent Document 1, when a service plug is pulled out, a battery circuit is shut off, and a battery unit is brought into a non-energized state. The service plug is provided so as to protrude rearward from the battery unit and is exposed to the outside.

### PRIOR ART DOCUMENT

### PATENT DOCUMENT

Patent Document 1: JP-A-2020-45631

### SUMMARY OF INVENTION

### TECHNICAL PROBLEM

However, in Patent Document 1, in a case where an obstacle collides with a rear portion of the electric hydraulic excavator (working machine), there is a high possibility that the service plug is damaged. Therefore, even when the service plug is in a pulled-out state, the battery unit is not brought into a non-energized state, and safety during inspection may be reduced. Furthermore, there is a possibility that the battery unit is damaged due to pushing-in of the service plug or the like.

In view of the above circumstances, an object of the present invention is to reduce a risk of damage to the battery unit due to collision with an obstacle or the like, while ensuring safety during inspection or the like.

### SOLUTION TO PROBLEM

In order to achieve the above object, a working machine according to one aspect of the present invention includes a battery unit, a relay unit, and a safety device. The battery unit transmits and receives electric power with an electrical device. The relay unit relays the transmission and reception of the electric power. The safety device detects whether or not an electric circuit between the battery unit and the relay unit has been disconnected. In a case where the electric circuit is disconnected, the transmission and reception of the electric power is brought into a stopped state. At least a part of the safety device is disposed above the battery unit.

Further features and advantages of the present invention will become more apparent from the following embodiment.

### ADVANTAGEOUS EFFECTS OF INVENTION

According to the present invention, a risk of damage to the battery unit due to collision with an obstacle or the like can be reduced, while ensuring safety during inspection or the like.

### BRIEF DESCRIPTION OF DRAWINGS

Fig. 1 is a schematic side view illustrating a configuration example of a hydraulic excavator according to the present embodiment;
Fig. 2 is a block diagram schematically illustrating configurations of an electrical system and a hydraulic system of the hydraulic excavator;
Fig. 3 is a cross-sectional view illustrating a configuration example inside an engine room; and
Fig. 4 is a perspective view inside the engine room.

### DESCRIPTION OF EMBODIMENTS

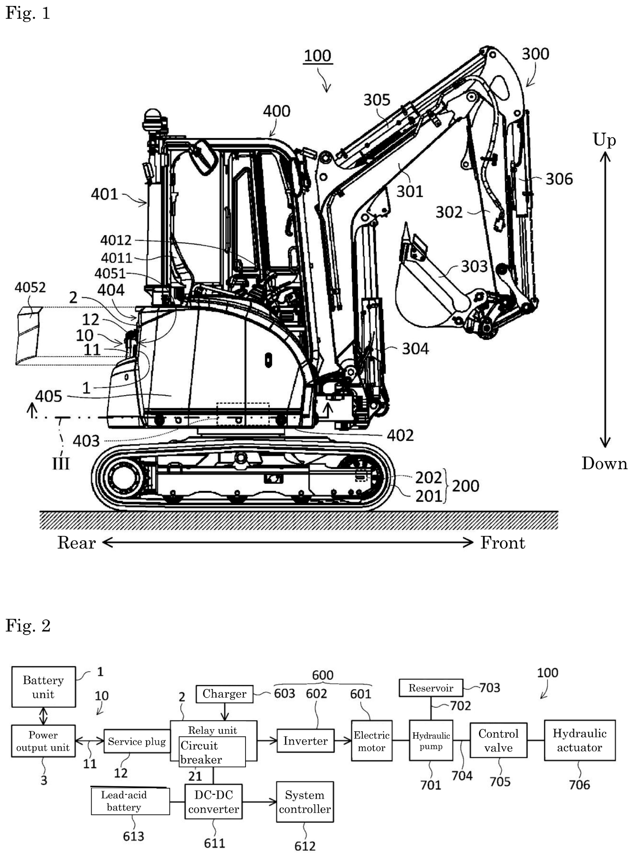

Hereinafter, an embodiment of the present invention will be described with reference to the drawings. Fig. 1 is a schematic side view illustrating a configuration example of a hydraulic excavator 100 according to the present embodiment. Fig. 2 is a block diagram schematically illustrating configurations of an electrical system and a hydraulic system of the hydraulic excavator 100. The hydraulic excavator 100 is an example of a "working machine" of the present invention.

### <1. Hydraulic Excavator 100>

The hydraulic excavator 100 includes a lower traveling body 200, an implement 300, and an upper turning body 400. In the present embodiment, the upper turning body 400 (particularly an engine room 404 described later) may be collectively referred to as a "machine body".

Note that directions in the present disclosure are defined as follows. First, in the upper turning body 400, a direction from one of a front side and a back side of a driver's seat 4011 to be described later on which an operator (an operating person or a driver) sits toward the other is defined as a "front-rear direction". In the "front-rear direction", a direction from the back side to the front side of the driver's seat 4011 is a "front side", and a direction from the front side to the back side of the driver's seat 4011 is a "rear side". Therefore, in a state where the upper turning body 400 is not turning with respect to the lower traveling body 200 (turning angle: 0°), a front-rear direction of the upper turning body 400 coincides with a direction in which the lower traveling body 200 moves forward and rearward.

In a state where the front is viewed from the rear side, a direction from one of a left side and a right side of the driver's seat 4011 toward the other is a "left-right direction". In the left-right direction, a direction toward the left side of the driver's seat 4011 is a "left side", and a direction toward the right side of the driver's seat 4011 is a "right side".

Further, a direction from one of the lower traveling body 200 and the upper turning body 400 to the other is referred to as an "up-down direction". In the up-down direction, a direction from the lower traveling body 200 to the upper turning body 400 is an "upper side", and a direction from the upper turning body 400 to the lower traveling body 200 is a "lower side". Therefore, when the hydraulic excavator 100 is arranged on a horizontal plane whose normal direction is the vertical direction, the up-down direction of the hydraulic excavator 100 coincides with the vertical direction. Further, the upper side coincides with the vertically upper side, and the lower side coincides with the vertically lower side.

The front-rear direction, the left-right direction, and the up-down direction are perpendicular to each other.

However, the above definitions of directions are merely used for description, and are not intended to limit the actual positional relationships and directions.

### <1-1. Lower Traveling Body 200>

The lower traveling body 200 includes a pair of left and right crawlers 201 and a pair of left and right traveling motors 202. Each of the traveling motors 202 is a hydraulic motor. The left and right traveling motors 202 drive the left and right crawlers 201, respectively, so that the hydraulic excavator 100 can be moved forward and rearward.

### <1-2. Implement 300>

The implement 300 includes a boom 301, an arm 302, and a bucket 303. By independently driving the boom 301, the arm 302, and the bucket 303, excavation work of earth, sand, and the like can be performed. The boom 301 is rotated by a boom cylinder 304. A base end portion of the boom cylinder 304 is supported by a front portion of the upper turning body 400 and is movable so as to be capable of freely extending and contracting. The arm 302 is rotated by an arm cylinder 305. A base end portion of the arm cylinder 305 is supported by the boom 301 and is movable so as to be capable of freely extending and contracting. The bucket 303 is rotated by a bucket cylinder 306. A base end portion of the bucket cylinder 306 is supported by the arm 302 and is movable so as to be capable of freely extending and contracting. The boom cylinder 304, the arm cylinder 305, and the bucket cylinder 306 are configured with hydraulic cylinders.

### <1-3. Upper Turning Body 400>

The upper turning body 400 is located above the lower traveling body 200 and is provided to be turnable with respect to the lower traveling body 200 via a turning bearing (not illustrated). The upper turning body 400 includes a steering unit 401, a body frame 402, a turning motor 403, an engine room 404, and a hood 405. The driver's seat 4011 is arranged in the steering unit 401. Various levers 4012 are arranged around the driver's seat 4011. When the operator sits on the driver's seat 4011 and operates the levers 4012, a hydraulic actuator 706 (see Fig. 2) is driven. As a result, the hydraulic excavator 100 can perform traveling of the lower traveling body 200, excavation work by the implement 300, turning of the upper turning body 400, and the like. The body frame 402 has a plate shape extending perpendicularly to the up-down direction. The steering unit 401, the turning motor 403, and various devices and the like mounted in the engine room 404 are mounted on the body frame 402. The hood 405 is a housing having the engine room 404 therein, and is arranged below the steering unit 401. The hood 405 covers the engine room 404 together with a platform of the steering unit 401, the body frame 402, and the like. The upper turning body 400 turns via the turning bearing by driving of the turning motor 403 which is a hydraulic motor.

Further, the hood 405 of the hydraulic excavator 100 includes an opening 4051 and a hood cover 4052. The opening 4051 is a window for viewing an inside of the engine room 404, and is disposed at a center portion in a left-right direction of a rear portion of the upper turning body 400. The hood cover 4052 is detachably attachable to the opening 4051, and covers the opening 4051 when attached. In the present disclosure, "detachably attachable" means attachable and detachable.

In addition, the upper turning body 400 further includes a battery unit 1, a relay unit 2, a power distribution unit (PDU) 3, an electric motor 601, a charger 602, an inverter 603, a DC-DC converter 611, a system controller 612, and a lead-acid battery 613. The upper turning body 400 further includes a hydraulic pump 701, a hydraulic hose 702, a reservoir 703, pipes 704, a control valve 705, and hydraulic actuators 706. These are all housed in the engine room 404.

Note that the hydraulic excavator 100 may have a configuration in which a hydraulic device such as the hydraulic actuator 706 and an actuator driven by electric power are used in combination. Examples of the actuator driven by electric power include an electric traveling motor, an electric cylinder, and an electric turning motor.

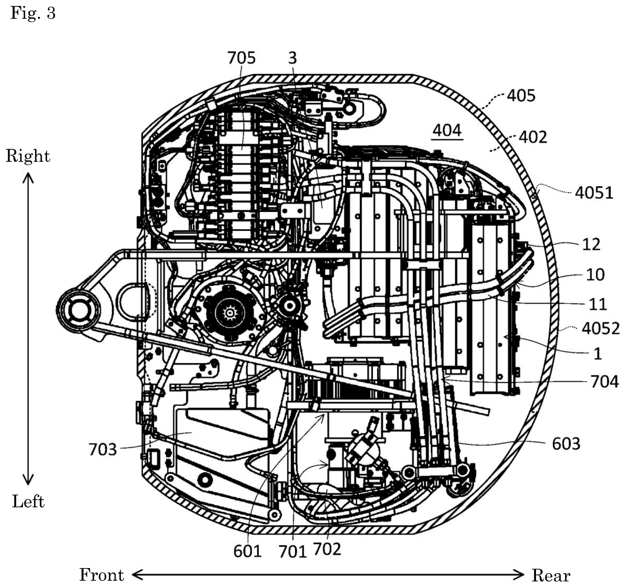

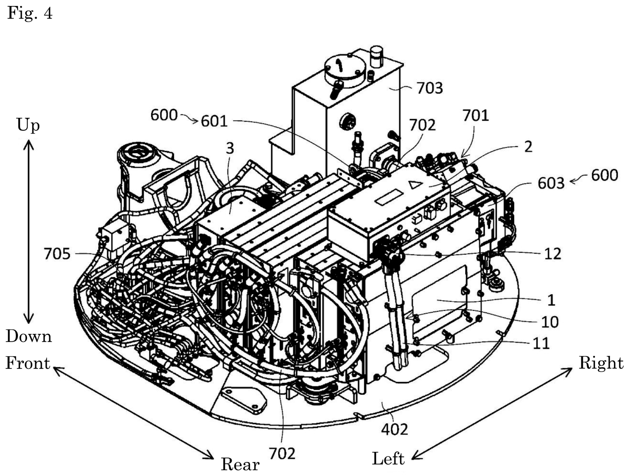

Fig. 3 is a cross-sectional view illustrating a configuration example inside the engine room 404. Fig. 4 is a perspective view inside the engine room 404. Fig. 3 illustrates a cross-sectional structure of the engine room 404 virtually cut along a plane that includes the two-dot chain line III-III of Fig. 1 and is perpendicular to the vertical direction. Fig. 4 illustrates the inside of the engine room 404 viewed from above toward obliquely downward.

### <1-3-1. Configuration of Electrical System>

The battery unit 1 is constituted by a chargeable and dischargeable secondary battery such as a lithium-ion battery, and transmits and receives electric power with predetermined electrical devices 600. The predetermined electrical devices 600 include, for example, an electric motor 601, a charger 602, and an inverter 603. For example, the battery unit 1 supplies electric power to the charger 602 and the electric motor 601. The battery unit 1 may be constituted by unitizing a plurality of battery modules, or may be constituted by a single battery module. However, the electrical device 600 is not limited to the above examples, and may include components other than the electric motor 601, the charger 602, and the inverter 603.

The electric motor 601 includes a permanent magnet motor, an induction motor, and the like, and drives the hydraulic pump 701. The electric motor 601 receives supply of electric power from the battery unit 1 via the relay unit 2 and the inverter 603. The electric motor 601 is supported on the body frame 402 via a vibration-proof support member.

The charger 602 converts an AC voltage supplied from a commercial power source via a power supply cable (not illustrated) into a DC voltage, and outputs the DC voltage to the battery unit 1, the inverter 603, and the like.

The inverter 603 converts a direct-current voltage supplied from the battery unit 1 or the charger 602 into an AC voltage and supplies the AC voltage to the electric motor 601. As a result, the electric motor 601 rotates. The AC voltage (current) is supplied from the inverter 603 to the electric motor 601 based on a rotation command output from the system controller 612.

The relay unit 2 is a relay unit constituted by including a charger relay, an inverter relay, fuses, and the like, and is also referred to as a junction box. The relay unit 2 relays transmission and reception of electric power between the battery unit 1 and the above-described electrical devices 600. For example, a voltage output from the charger 602 is supplied to the battery unit 1 via the relay unit 2, the power distribution unit 3, and the like. A voltage output from the battery unit 1 is supplied to the inverter 603 via the power distribution unit 3 and the relay unit 2.

The relay unit 2 is electrically connected to the battery unit 1 via an electric circuit 10. In the present embodiment, the electric circuit 10 includes a cable 11, a service plug 12, and the power distribution unit 3. The cable 11 is wiring and electrically connects the power distribution unit 3 and the relay unit 2. The service plug 12 is a connector for electrically connecting one end portion of the cable 11 to the relay unit 2, and is disposed at the one end portion of the cable 11. The service plug 12 is detachably connected to the relay unit 2 and electrically connects the one end portion of the cable 11 and the relay unit 2. The other end portion of the cable 11 is connected to the power distribution unit 3. The power distribution unit 3 distributes electric power of the battery unit 1 to various components, and outputs (distributes), for example, electric power of the battery unit 1 to the other end portion of the cable 11.

The service plug 12 is an example of the "safety device" of the present invention, and has a function as a safety device for detecting whether or not the electric circuit 10 between the battery unit 1 and the relay unit 2 has been disconnected. Accordingly, the safety device can be disposed with a simple configuration. Details of this function of the service plug 12 will be described later.

Preferably, the cable 11 is arranged so as to pass through a lower side of the battery unit 1. Accordingly, the cable 11 can be arranged in a portion that has a low possibility of being damaged even when an obstacle collides during operation of the upper turning body 400. Therefore, a possibility that the cable 11 is broken or the like can be suppressed. However, this example does not exclude a configuration in which the cable 11 does not pass through the lower side of the battery unit 1.

The power distribution unit 3 is a battery control unit, and controls input and output of electric power of the battery unit 1 by controlling an internal battery relay. Preferably, as in the present embodiment, the power distribution unit 3 is disposed forward of the battery unit 1. With this arrangement, a power supply unit including the battery unit 1, the power distribution unit 3, and the like can be optimally configured. Further, the high-voltage power distribution unit 3 can be disposed in a portion that has a low possibility of being damaged even when an obstacle collides during operation of the upper turning body 400.

The DC-DC converter 611 steps down a high-voltage direct-current voltage (for example, 300 V) supplied from the battery unit 1 via the relay unit 2 to a low voltage (for example, 12 V). The voltage output from the DC-DC converter 611 is supplied to the system controller 612 and the like together with the output from the lead-acid battery 613.

The system controller 612 includes an electronic control unit also called an ECU, and controls the respective components of the hydraulic excavator 100.

The lead-acid battery 613 outputs a DC voltage of a low voltage (for example, 12 V). The output from the lead-acid battery 613 is supplied to, for example, the system controller 612 as a control voltage.

### <1-3-2. Configuration of Hydraulic System>

The hydraulic pump 701 is driven by the electric motor 601, and supplies hydraulic oil to hydraulic motors and hydraulic cylinders. Note that examples of the above-described hydraulic motor include the left and right traveling motors 202 and the turning motor 403. Examples of the above-described hydraulic cylinder include the boom cylinder 304, the arm cylinder 305, and the bucket cylinder 306. In addition, the hydraulic motor and the hydraulic cylinder driven by the hydraulic oil supplied from the hydraulic pump 701 are collectively referred to as the hydraulic actuator 706.

The hydraulic pump 701 is connected to the reservoir 703 via a hydraulic hose 702. The reservoir 703 is a hydraulic oil tank that contains (stores) the hydraulic oil. Further, the hydraulic pump 701 is connected to the control valve 705 via pipes 704. Accordingly, the hydraulic pump 701 can supply hydraulic oil to the control valve 705. The control valve 705 includes a plurality of direction switching valves, and controls the flow (flow direction, flow rate, and the like) of the hydraulic oil pressure-fed from the hydraulic pump 701. For example, the control valve 705 supplies the hydraulic oil to the hydraulic actuator 706 and the like.

When the hydraulic pump 701 is driven by the electric motor 601, the hydraulic oil in the reservoir 703 is supplied to the hydraulic actuator 706 via the control valve 705. As a result, the hydraulic actuator 706 is driven.

The hydraulic pump 701 may be a variable displacement pump or a fixed displacement pump. In the present embodiment, the number of the hydraulic pumps 701 is one. However, the present invention is not limited to this example, and a plurality of the hydraulic pumps 701 may be provided.

### <1-4. Service Plug 12>

As described above, the service plug 12 is a device for detecting whether or not the electric circuit 10 between the battery unit 1 and the relay unit 2 has been disconnected. Based on a detection result thereof, whether transmission and reception of electric power between the battery unit 1 and the electrical devices 600 is permitted is switched.

Specifically, in a case where the electric circuit 10 between the battery unit 1 and the relay unit 2 is disconnected, transmission and reception of electric power between the battery unit 1 and the electrical devices 600 is brought into a stopped state. Accordingly, in a case where the electric circuit 10 is disconnected, not only can the electric circuit 10 be made non-energizable, but also a voltage can be prevented from being applied to the electric circuit 10. Therefore, it is possible to prevent a risk that a worker is electrically shocked during inspection, maintenance, or the like. On the other hand, in a case where connection of the electric circuit 10 is maintained, the above-described electric power is brought into a transmissible and receivable state.

The system controller 612 determines whether or not the electric circuit 10 has been disconnected by detecting presence or absence of connection of the service plug 12 to the relay unit 2 based on a state of the service plug 12. An aspect of a function of the service plug 12 as a safety device is not particularly limited. For example, a protruding portion may be disposed on one of the service plug 12 and the relay unit 2, and a recessed portion into which the protruding portion can be inserted may be disposed on the other. In this case, the system controller 612 detects that the protruding portion has been pulled out from the recessed portion, thereby detecting detachment of the service plug 12 from the relay unit 2 (that is, disconnection of the electric circuit 10).

In addition, the relay unit 2 further includes a circuit breaker 21. In the present embodiment, the circuit breaker 21 includes a relay circuit. When the system controller 612 detects detachment of the service plug 12 from the relay unit 2 (that is, disconnection of the electric circuit 10), the system controller 612 cuts off the relay circuit of the circuit breaker 21, relay circuits in the relay unit 2, and the like. The relay circuits in the relay unit 2 are disposed in respective electric circuits connected to the charger 602, the inverter 603, the DC-DC converter 611, and the like. Accordingly, an electrical connection between the service plug 12 (in other words, one end portion of the cable 11) and the relay unit 2 is disconnected. On the other hand, in a case where the system controller 612 does not detect detachment of the service plug 12 from the relay unit 2 (that is, disconnection of the electric circuit 10), the above-described electrical connection is maintained.

Preferably, at least a part of the service plug 12 is disposed above the battery unit 1. Thus, the hydraulic excavator 100 can ensure safety during operations such as inspection and maintenance, while reducing the risk of damage to the battery unit 1 due to collisions with obstacles.

For example, when the upper turning body 400 collides with an obstacle during operation, an impact is normally applied in a direction perpendicular to the up-down direction. Therefore, by disposing at least a part of the service plug 12 above the battery unit 1, it is possible to suppress or prevent a risk that the service plug 12 that has received the impact is damaged due to contact with the battery unit 1 at the time of the above-described collision. Accordingly, during inspection after the collision, the service plug 12 (particularly its function as a safety device) is likely to normally operate. Thus, safety of inspection work and maintenance work can be improved.

Further, even when collision between the upper turning body 400 and an obstacle as described above occurs, deformation of the battery unit 1 due to contact with the service plug 12 that has received the impact can be suppressed or prevented. For example, in a case where an entirety of the service plug 12 is disposed above the battery unit 1 in the up-down direction, the battery unit 1 can avoid contact with the service plug 12, and thus damage can be prevented. Further, even in a case where a part of the service plug 12 that has received the impact (such as a lower portion) overlaps the battery unit 1 in a direction perpendicular to the up-down direction, the part only contacts an end portion (for example, an upper end portion) of the battery unit 1. Therefore, a risk that a main portion (for example, a battery module) of the battery unit 1 is damaged due to the contact can be reduced.

When the cable 11 is electrically connected to the relay unit 2, the service plug 12 is detachably attached to the relay unit 2. Here, in a case where the service plug 12 is detached from the relay unit 2, transmission and reception of electric power between the battery unit 1 and the electrical devices 600 is brought into a stopped state, for example, by disconnection of the electrical connection by the circuit breaker 21. With this arrangement, safety during inspection, maintenance, or the like can be ensured with a simple configuration.

Preferably, as in the present embodiment, the relay unit 2 is disposed above the battery unit 1. With this arrangement, even when the upper turning body 400 collides with an obstacle during operation, it is possible to prevent one of the battery unit 1 and the relay unit 2 from being pressed into the other. Accordingly, a risk of damage to the battery unit 1 and the relay unit 2 can be reduced.

In the present embodiment, one end portion of the cable 11 (that is, the service plug 12) is arranged on a hood cover 4052 side of the battery unit 1. Further, the hood cover 4052 covers the battery unit 1 and the service plug 12. At this time, the hood cover 4052 is disposed rearward of the battery unit 1 with a spacing from the service plug 12. For example, as illustrated in Fig. 3, the hood cover 4052 faces the service plug 12 with a spacing therebetween in the front-rear direction. With arrangement of the hood cover 4052, it is possible to prevent an external force from acting on the battery unit 1 and the service plug 12. Further, during inspection or the like, a worker can immediately access the service plug 12 by removing the hood cover 4052. Accordingly, safety of the battery unit 1 and the service plug 12 and workability of inspection, maintenance, or the like can be achieved together.

### <2. Remarks>

The embodiment of the present invention has been described above. Note that the above embodiment is an example, and it is understood by those skilled in the art that various modifications can be made to combinations of the respective components and the respective processes, and these modifications are also within the scope of the present invention.

For example, the hydraulic excavator 100, which is a construction machine, has been described as an example of the "working machine" of the present invention in the above embodiment. However, this example does not exclude a configuration in which the present invention is applied to a working machine other than the hydraulic excavator 100. For example, the "working machine" of the present invention may be another construction machine such as a wheel loader, or an agricultural machine such as a combine harvester or a tractor.

In the above-described embodiments, the "safety device" of the present invention is assumed to be a function of the service plug 12. However, the "safety device" of the present invention is not limited to this example, and may be a component different from the service plug 12.

### <3. Summary>

Hereinafter, the embodiment described so far will be summarized.

For example, the working machine 100 disclosed in the present specification includes
a battery unit 1 that transmits and receives electric power with electrical devices 600,
a relay unit 2 that relays transmission and reception of the electric power, and
a safety device 12 that detects whether or not an electric circuit 10 between the battery unit 1 and the relay unit 2 has been disconnected, and that brings transmission and reception of the electric power into a stopped state in a case where the electric circuit 10 is disconnected, in which
at least a part of the safety device 12 is disposed above the battery unit 1
(first configuration).

The working machine 100 having the first configuration may further have a configuration in which
the safety device 12 is detachably attached to the relay unit 2, and
in a case where the safety device 12 is detached from the relay unit 2, transmission and reception of the electric power is brought into a stopped state
(second configuration).

Further, the working machine 100 having the first or second configuration may have a configuration in which
the relay unit 2 is disposed above the battery unit 1
(third configuration).

Further, the working machine 100 having any one of the first to third configurations may have a configuration in which
the electric circuit 10 includes a cable 11 having the safety device 12 disposed at one end portion thereof
(fourth configuration).

Further, the working machine 100 having the fourth configuration may further have a configuration in which
a detachable hood cover 4052 that covers the battery unit 1 and the safety device 12 is further provided,
the one end portion of the cable 11 is arranged on a hood cover 4052 side of the battery unit 1, and
the hood cover 4052 is disposed rearward of the battery unit 1 with a spacing from the safety device 12
(fifth configuration).

Further, the working machine 100 having the fourth or fifth configuration may further have a configuration in which
a power distribution unit 3 that is included in the electric circuit 10, that is disposed forward of the battery unit 1, that is connected to the other end portion of the cable 11, and that outputs electric power of the battery unit 1 is further provided
(sixth configuration).

Further, the working machine 100 having any one of the fourth to sixth configurations may have a configuration in which
the cable 11 is arranged so as to pass through a lower side of the battery unit 1
(seventh configuration).

### INDUSTRIAL APPLICABILITY

The present invention is applicable to working machines such as construction machines and agricultural machines.

### LIST OF REFERENCE SIGNS

- 100: Hydraulic excavator (working machine)
- 200: Lower traveling body
- 201: Crawler
- 202: Traveling motor
- 300: Implement
- 301: Boom
- 302: Arm
- 303: Bucket
- 304: Boom cylinder
- 305: Arm cylinder
- 306: Bucket cylinder
- 400: Upper turning body
- 401: Steering unit
- 4011: Driver's seat
- 4012: Lever
- 402: Body frame
- 403: Turning motor
- 404: Engine room
- 405: Hood
- 4051: Opening
- 4052: Hood cover
- 600: Electrical device
- 601: Electric motor
- 602: Charger
- 603: Inverter
- 611: DC-DC converter
- 612: System controller
- 613: Lead-acid battery
- 701: Hydraulic pump
- 702: Hydraulic hose
- 703: Reservoir
- 704: Pipe
- 705: Control valve
- 706: Hydraulic actuator
- 1: Battery unit
- 10: Electric circuit
- 11: Cable
- 12: Service plug
- 2: Relay unit
- 3: Power distribution unit

## Claims

1. A working machine, comprising:
a battery unit that transmits and receives electric power with an electrical device;
a relay unit that relays the transmission and reception of the electric power; and
a safety device that detects whether an electric circuit between the battery unit and the relay unit has been disconnected, and to bring the transmission and reception of the electric power into a stopped state in a case where the electric circuit is disconnected, wherein
at least a part of the safety device is disposed above the battery unit.

2. The working machine according to claim 1, wherein the safety device is detachably attached to the relay unit, and
in a case where the safety device is detached from the relay unit, the transmission and reception of the electric power is brought into a stopped state.

3. The working machine according to claim 1, wherein the relay unit is disposed above the battery unit.

4. The working machine according to claim 1, wherein the electric circuit includes a cable having the safety device disposed at one end portion thereof.

5. The working machine according to claim 4, further comprising: a detachable hood cover that covers the battery unit and the safety device, wherein
the one end portion of the cable is arranged on a hood cover side of the battery unit, and
the hood cover is disposed rearward of the battery unit with a spacing from the safety device.

6. The working machine according to claim 4, further comprising: a power distribution unit that is included in the electric circuit, that is disposed forward of the battery unit, that is connected to the other end portion of the cable, and that outputs electric power of the battery unit.

7. The working machine according to claim 4, wherein the cable is arranged to pass through a lower side of the battery unit.

8. The working machine according to claim 1, wherein the battery unit is constituted by unitizing a plurality of battery modules.

9. The working machine according to claim 1, wherein the safety device is disposed in an engine room in which the battery unit is accommodated, and is provided above and rearward of the battery unit.

10. The working machine according to claim 1, wherein the safety device prohibits driving of the electric motor in a case where the electric circuit is disconnected.
